# EUROPÄISCHE PATENTSCHRIFT

(11) **EP 1 404 097 B1**
(45) Veröffentlichungstag und Bekanntmachung des Hinweises auf die Patenterteilung: **02.11.2006**
(21) Anmeldenummer: 02021971.3
(22) Anmeldetag: 30.09.2002
(51) Int. Cl.: H04M 3/56, H04M 7/00

(54) **System und Verfahren zum Aufbau einer Telefonkonferenz**
System and method of setting up a telephone conference
Système et procédé pour l'établissement d'une conférence téléphonique

(43) Veröffentlichungstag der Anmeldung: 31.03.2004
(73) Patentinhaber: SIEMENS AKTIENGESELLSCHAFT, 80333 München (DE)
(72) Erfinder: Le Coent, Yannick, 22700 Louannec (FR); Unger, Stefan, 82008 Unterhaching (DE)
(74) Vertreter: Berg, Peter

(56) Entgegenhaltungen:
- EP-A- 0 883 306
- WO-A-01/35655
- US-A1- 2002 124 100
- US-B1- 6 272 214
- TOGA J ET AL: "ITU-T STANDARDIZATION ACTIVITIES FOR INTERACTIVE MULTIMEDIA COMMUNICATIONS ON PACKET-BASED NETWORKS: H.323 AND RELATED RECOMMENDATIONS" COMPUTER NETWORKS AND ISDN SYSTEMS, NORTH HOLLAND PUBLISHING. AMSTERDAM, NL, Bd. 31, Nr. 3, 11. Februar 1999 (1999-02-11), Seiten 205-223, XP000700319 ISSN: 0169-7552
- ROSENBERG ET AL: "An application server component architecture for SIP" INTERNET ENGINEERING TASK FORCE INTERNET DRAFT, XX, XX, 2. März 2001 (2001-03-02), Seiten 1-38, XP002205320
- ROSENBERG J: "Models for multi party conferencing in SIP" INTERNET ENGINEERING TASK FORCE INTERNET DRAFT, XX, XX, 17. November 2000 (2000-11-17), Seiten 1-21, XP002205321
- "A Primer on the H.323 Series Standard" DATABEAM CORP. WHITE PAPER, 15. Mai 1998 (1998-05-15), XP002152854 Gefunden im Internet: <URL:http://www.databeam.com/pdffiles/h323 _primer-v2.pdf> [gefunden am 2000-11-15]
- "PACKET-BASED MULTIMEDIA COMMUNICATIONS SYSTEMS" ITU-T H.323, XX, XX, November 2000 (2000-11), Seiten 1-257, XP002226856

## Beschreibung

Die Erfindung betrifft ein Verfahren zum Aufbau einer Telefonkonferenz, bei dem ein erster Teilnehmer eines Telekommunikationsnetzes bei einer Konferenzeinrichtung eine Telefonkonferenz mit weiteren Teilnehmern bucht, sowie eine Vorrichtung zur Durchführung des erfindungsgemäßen Verfahrens.

Moderne Telekommunikationsnetze bieten nicht nur die Möglichkeit des Gesprächsaufbaus für zwei Teilnehmer, sondern gestatten es auch, Telefonkonferenzen zwischen mehreren Teilnehmern zu schalten beziehungsweise für einen bestimmten Zeitpunkt zu buchen. Beispielsweise kann diese über das Internet, durch Einwahl bei einem entsprechenden Server, unter Angabe des Konferenzbeginns und der Adressen der daran teilnehmende Personen gebucht werden. Der Server stellt in Folge die Verbindung zu den einzelnen Teilnehmern zum angegebenen Zeitpunkt her und verknüpft diese Verbindungen, sodass ein gemeinsames Gespräch möglich ist.

Nach dem Stand der Technik existieren dazu verschiedene Möglichkeiten:

Beispielsweise kann eine Telefonkonferenz über ein paketvermittelndes Telekommunikationsnetz, beispielsweise das Internet, gebucht und in einem verbindungsorientierten Telekommunikationsnetz, etwa dem klassischen Telefonnetz, durchgeführt werden. Das Datennetz dient dabei lediglich zur Übertragung der für eine Buchung beziehungsweise Steuerung der Konferenz nötigen Daten, die eigentliche Gesprächszusammenschaltung wird aber ausschließlich im verbindungsorientierten Telekommunikationsnetz hergestellt. Dieser Dienst ist auch unter dem Begriff "Click to Conference", kurz CtC, bekannt.

Möglich ist aber auch eine Gesprächszusammenschaltung nach dem Standard H.323 oder SIP. Voraussetzung hierfür ist, dass die Teilnehmer über einen Internet-Protocol-fähigen Telefonanschluss verfügen. Die eigentliche Gesprächszusammenschaltung erfolgt hierbei im paketorientierten Netz, speziell in einer Konferenzeinheit, mit Hilfe derer die Datenpakete mit Sprachinformation entsprechend gemischt werden.

Eine weitere Möglichkeit besteht darin, dass die Gesprächszusammenschaltung in einem verbindungsorientierten Telekommunikationsnetz erfolgt, die Teilnehmer aber über einen Internet-Protocol-fähigen Telefonanschluss verfügen. Die Sprachinformation wird hierbei in sogenannten Media-Gateways vom Übertragungsformat des verbindungsorientierten Telekommunikationsnetzes in das Übertragungsformat des paketorientierten Datennetzes umgesetzt und umgekehrt.

Diese und Viele weitere Möglichkeiten sind aus Dokumenten WO 01/35655, XP000700319, EP 0883306 und US 2002/0124100 bekannt.

Trotz der Vielzahl von Möglichkeiten kann eine Telefonkonferenz jedoch nicht immer auf befriedigende Weise hergestellt werden.

Aufgabe der Erfindung ist es daher, ein verbessertes Verfahren zum Aufbau einer Telefonkonferenz anzugeben.

Dies geschieht erfindungsgemäß mit einem Verfahren gemäß Anspruch 1,
- bei dem von einer Konferenzeinrichtung die Internetadressen jener Teilnehmer ermittelt werden, die rechtzeitig vor Beginn der Telefonkonferenz eine Internetverbindung zu dieser Konferenzeinrichtung hergestellt haben, und
- bei dem von einer Konferenzeinrichtung bei Beginn der Konferenz zu jenen Teilnehmern, für die eine Internetadresse verfügbar ist, eine paketorientierte Gesprächsverbindung zu dieser Adresse hergestellt wird.

Die Internetadressen zum Aufbau einer Gesprächsverbindung werden also anlassbedingt, das heißt unmittelbar vor dem Aufbau der Telefonkonferenz, ermittelt. Dies ist insbesondere für Teilnehmer von Vorteil, die keinen permanenten Zugang zum Internet haben und denen daher bei der Einwahl in der Regel eine dynamische Adresse zugewiesen wird. Durch die Erfindung wird sichergestellt, dass die für die Konferenz aufzubauenden Verbindungen auch an die richtige Adresse erfolgen. Vorteilhaft ist die Erfindung aber auch für den buchenden Teilnehmer, da dieser keine Kenntnis über die Teilnehmeradressen für die Gesprächsverbindung haben muss.

Die Ermittlung der - gegebenenfalls dynamischen - Adresse der Teilnehmer bedingt aber, dass diese vor dem Aufbau der Konferenz eine Verbindung zu dem erwähnten Server herstellen. In Folge wird die Konferenz zum angegebenen Zeitpunkt aufgebaut, indem die einzelnen paketorientierte Verbindungen zu den ermittelten Adressen der Teilnehmer aufgebaut werden.

Im Gegensatz zum Stand der Technik brauchen die Konferenzteilnehmer hier nicht IP-Telefonteilnehmer zu sein beziehungsweise keinen IP-fähigen Telefonanschluß zu haben. Die Konferenzteilnehmer sind "normale" Teilnehmer eines herkömmlichen Telefonnetzes und werden etwa mit Hilfe eines Gateways über das "Voice over Internet Protocol" gerufen. Sie benötigen daher vorteilhafterweise auch keine Registrierung bei einem Betreiber eines VoIP-Telefonnetzes.

Voraussetzung für das Funktionieren der Konferenzschaltung ist lediglich, dass die Konferenzteilnehmer über ein für den Sprechverkehr und den Anschluss an das Internet ausgerüstetes Endgerät verfügen. Ein Beispiel hiefür ist ein Multimedia-PC, welcher einen sogenannten Voice over IP Client, etwa Microsoft Netmeeting für H.323 oder Microsoft Messenger für SIP - beides kostenlose Standardsoftware - umfasst. Durch die Verwendung von erprobten Standardkomponenten tritt der Vorteil des erfindungsgemäßen Verfahrens an dieser Stelle besonders hervor.

Ergänzend wird angemerkt, dass sich die Erfindung nicht nur auf das Internet bezieht sondern allgemein auf Netze mit paketorientierten Verbindungen.

Besonders vorteilhaft ist es auch, wenn von der Konferenzeinrichtung bei Beginn der Konferenz zu jenen Teilnehmern, für die keine Internetadresse verfügbar ist, eine verbindungsorientierte Gesprächsverbindung hergestellt wird.

Da nicht sichergestellt werden kann, dass jeder Konferenzteilnehmer auch tatsächlich rechtzeitig eine Verbindung zu der Konferenzeinrichtung herstellt, wird alternativ versucht, eine Gesprächsverbindung über ein verbindungsorientiertes Netz, etwa über das klassische Telefonnetz, herzustellen. Mit dieser Maßnahme soll eine optimale Erreichbarkeit der Teilnehmer für den Aufbau der Telefonkonferenz erreicht werden. Auch für den Fall dass Konferenzteilnehmer lediglich über ein herkömmliches Telefon für ein verbindungsorientiertes Telekommunikationsnetz verfügen, stellt diese Ausgestaltung eine vorteilhafte Variante der Erfindung dar.

Günstig ist auch ein Verfahren,
- bei dem von einem Server der Konferenzeinrichtung Internetadressen und/oder Telefonnummern der Konferenzteilnehmer an einen Vermittlungsknoten der Konferenzeinrichtung weitergeleitet werden,
- bei dem vom Vermittlungsknoten daraufhin zu den Teilnehmern, für die eine Internetadresse verfügbar ist, eine paketorientierte Gesprächsverbindung zu dieser Adresse über ein Gateway und/oder zu den übrigen Teilnehmern eine verbindungsorientierte Gesprächsverbindung ohne Einbeziehung des Gateway hergestellt wird und
- bei dem die Verbindungen mit Hilfe einer Konferenzeinheit zusammengeschaltet werden.

Diese Variante der Erfindung ist besonders deswegen günstig, weil die daran beteiligten Module in einem Telekommunikationsnetz vielfach ohnehin vorhanden sind. Eine Umsetzung des erfindungsgemäßen Verfahrens ist deshalb vergleichsweise leicht möglich

Besonders vorteilhaft ist es dabei,
- wenn der erste Teilnehmer bei der Buchung der Telefonkonferenz die Email-Adressen für zumindest einen Teil der Konferenzteilnehmer angibt und
- wenn von der Konferenzeinrichtung Nachrichten an diese Adressen gesandt werden, welche Angaben über Beginn der Konferenz sowie eine Aufforderung an diese Teilnehmer enthalten, rechzeitig vor Beginn der Konferenz eine Verbindung zu einer angegebenen Internetadresse aufzubauen.

Um die Konferenzteilnehmer auch von der geplanten Telefonkonferenz in Kenntnis zu setzen, wird vom Server eine entsprechende Nachricht an die vom ersten Teilnehmer angegebenen Adressen gesendet. Diese lautet beispielsweise: "Konferenz mit Teilnehmer x und y um 15:00 geplant. Zur Teilnahme via Internet bauen sie bitte bis 14:55 eine Verbindung zu der Adresse z auf!"

Der Vorteil der Erfindung tritt hier besonders hervor, weil der buchende Teilnehmer in der Regel entweder Rufnummer oder Email-Adressen der Konferenzteilnehmer, nicht aber deren IP-Adressen kennt. Durch Angabe einer Email-Adresse wird jedoch ein Konferenzteilnehmer zum Aufbau einer Verbindung zur Konferenzeinrichtung aufgefordert, mit Hilfe derer dann von diesem die IP-Adresse des Teilnehmers ermittelt werden kann.

Günstig ist weiterhin ein Verfahren, bei dem der Zugang zu der von der Konferenzeinrichtung angegebenen Internetadresse mittels Zugangscode gesichert wird.

Um die Teilnahme unberechtigter Personen an der Telefonkonferenz zu unterbinden, kann die Konferenzeinrichtung mit Hilfe eines Zugangscodes gesichert werden. Dieser Zugangscode wird den Konferenzteilnehmern etwa in der erwähnten Email mitgeteilt.

Eine vorteilhafte Variante der Erfindung ist mit einem Verfahren gegeben,
- bei dem der erste Teilnehmer bei der Buchung der Telefonkonferenz die Rufnummer/Email-Adresse eines Konferenzteilnehmers angibt und
- bei dem von der Konferenzeinrichtung eine diesem Konferenzteilnehmer zugeordnete Email-Adresse/Rufnummer aus dieser Rufnummer/Email-Adresse ermittelt wird.

Hierbei ist für den buchenden Teilnehmer lediglich die Kenntnis der Rufnummer beziehungsweise Email-Adresse eines Konferenzteilnehmers erforderlich, nicht jedoch dessen Email-Adresse beziehungsweise Rufnummer. Die unbekannte Email-Adresse beziehungsweise Rufnummer kann vom Server aus der angegebenen Rufnummer beziehungsweise Email-Adresse ermittelt werden, etwa mit Hilfe eines entsprechenden Verzeichnisses.

Bei diesem Verzeichnis handelt es sicht etwa um eine Art Telefonbuch, welches beispielsweise Name, Rufnummer und Email-Adresse eines Teilnehmers enthält. Dieses kann von einem Teilnehmer, etwa dem Teilnehmer, welcher die Konferenz bucht, angelegt werden. Ein abermaliges Buchen einer Konferenz kann dann auf vereinfachte Weise erfolgen. Das angesprochene Verzeichnis kann aber auch zentral von einer Betreibergesellschaft angelegt werden.

Die Aufgabe der Erfindung wird weiterhin mit einer Konferenzeinrichtung zum Aufbau einer Telefonkonferenz gelöst, welcher für die Durchführung des erfindungsgemäßen Verfahrens und zur Annahme einer Buchung einer Telefonkonferenz eines erstes Teilnehmers mit weiteren Teilnehmern vorgesehen ist,
- welcher zusätzlich für die Ermittlung der Internetadressen jener Teilnehmer vorgesehen ist, die rechtzeitig vor Beginn der Telefonkonferenz eine Internetverbindung zur Konferenzeinrichtung hergestellt haben, und
- welcher zusätzlich für den Aufbau einer paketorientierten Verbindung zu jenen Teilnehmern, für die eine Internetadresse verfügbar ist, und insbesondere auch für den alternativen Aufbau einer verbindungsorientierten Verbindung zu Teilnehmern, für die keine Internetadresse verfügbar ist, vorgesehen ist.

Mit dieser Vorrichtung kann eine optimale Erreichbarkeit der Teilnehmer für den Aufbau der Telefonkonferenz erreicht werden, da eine paketorientierte Verbindung zu jenen Teilnehmern, für die eine Internetadresse verfügbar ist, und optional eine verbindungsorientierten Verbindung vorgesehen ist. Wie bereits erwähnt ist die anlassbedingte Ermittlung der Teilnehmeradressen insbesondere für Teilnehmer mit einer dynamischen IP-Adresse wichtig. Im Übrigen gelten die beim erfindungsgemäßen Verfahren genannten Vorteile auch für die erfindungsgemäße Vorrichtung gleichermaßen.

Günstig ist es, wenn die Konferenzeinrichtung einen Server, einen mit dem Server verbundenen Vermittlungsknoten und ein mit dem Vermittlungsknoten verbundenes Gateway umfasst.

Dabei ist die Konferenzeinrichtung aus mehreren Modulen aufgebaut, welche häufig ohnehin schon Bestandteil eines Telekommunikationsnetzes sind. Eine Umsetzung der Erfindung kann daher auf besonders einfache Weise erfolgen.

Vorteilhaft ist es dabei, wenn der Vermittlungsknoten für die Übermittlung einer Internetadresse an das Gateway vorgesehen ist.

Auch bei dieser Variante ist eine Umsetzung der Erfindung einfach möglich. Ein eventuell vorhandener Vermittlungsknoten muss dazu nur entsprechend erweitert werden, das heißt für die Übermittlung einer Internetadresse an das Gateway vorbereitet werden.

Besonders vorteilhaft ist es, wenn der Server für das Versenden von Nachrichten an Email-Adressen, welche vom ersten Teilnehmer für zumindest einen Teil der Konferenzteilnehmer angegeben wurden, vorgesehen ist, wobei die Nachrichten Angaben über Beginn der Konferenz sowie eine Aufforderung an die Teilnehmer enthalten, rechzeitig vor Beginn der Konferenz eine Verbindung zu einer angegebenen Internetadresse aufzubauen.

Mit Hilfe dieser Variante wird eine vorteilhafte Möglichkeit für die Informierung der Teilnehmer über das Stattfinden einer Konferenz geschaffen. Die Benachrichtigung enthält dabei wichtige Daten, wie etwa den Konferenzbeginn und eine Adresse, zu der sich Konferenzteilnehmer nach Möglichkeit verbinden sollten.

Günstig ist es weiterhin, wenn der Zugang zum Server mittels Zugangs code gesichert ist.

Dies ist eine Ausgestaltung der erfindungsgemäßen Vorrichtung, bei der die Teilnahme unberechtigter Personen an der Telefonkonferenz unterbunden ist.

Eine weitere vorteilhafte Variante der Erfindung ist mit einem Server gegeben, der für die Ermittlung einer einem Konferenzteilnehmer zugeordneten Email-Adresse aus einer vom ersten Teilnehmer angegebenen Rufnummer dieses Konferenzteilnehmers vorgesehen ist.

Hierbei erleichtert die Vorrichtung den Buchungsvorgang für den ersten Teilnehmer insofern, als dieser lediglich eine Rufnummer eines Konferenzteilnehmers kennen beziehungsweise eingeben muss, da die Vorrichtung für die Ermittlung einer eventuell nötigen Email-Adresse vorgesehen ist.

Vorteilhaft ist es auch, wenn der Server für die Ermittlung einer einem Konferenzteilnehmer zugeordneten Rufnummer aus einer vom ersten Teilnehmer angegebenen Email-Adresse dieses Konferenzteilnehmers vorgesehen ist.

Analog zu der bereits erwähnten Variante ist diese Vorrichtung für die Ermittlung einer Rufnummer aus einer Email-Adresse vorgesehen.

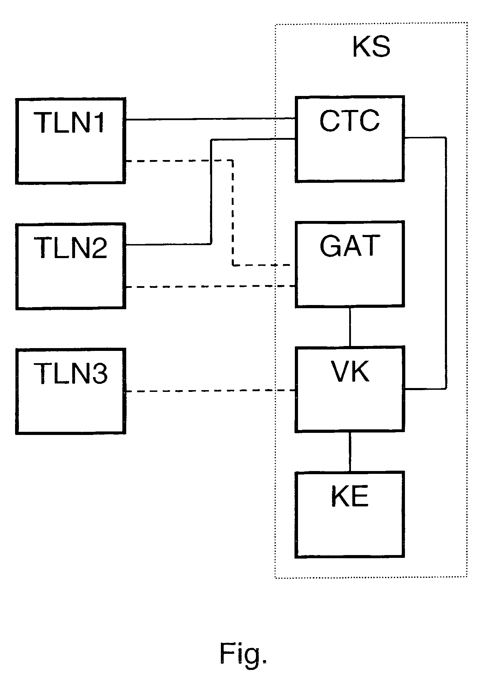

Die Erfindung wird nun anhand eines in der Figur dargestellten Ausführungsbeispiels näher erläutert, welches die Buchung einer Telefonkonferenz und den Aufbau derselben betrifft.

Die Figur umfasst einen ersten bis dritten Teilnehmer TLN1..TLN3, einen Vermittlungsknoten VK, eine daran angeschlossenen Konferenzeinheit KE, einen mit dem Vermittlungsknoten VK verbundenen Server CTC und ein ebenfalls an den Vermittlungsknoten angeschlossenes Gateway GAT. Der Vermittlungsknoten VK mit den daran angeschlossenen Einheiten bildet die Konferenzeinrichtung KS.

Die Funktion der in der Figur dargestellten Anordnung ist wie folgt:

Zu Beginn stellt der erste Teilnehmer TLN1 eine Internetverbindung zum Server CTC, dessen Adresse beispielsweise "https://www.server-ctc.org" lautet, her und bucht unter Angabe des Konferenzbeginns sowie unter Angabe des zweiten und dritten Teilnehmers TLN2 und TLN3 die Konferenz. Als Identifikation des zweiten und dritten Teilnehmers TLN2 und TLN3 dienen hier deren jeweils zugeordnete Email-Adressen, etwa "tln2@net2.com" und "tln3@net3.com", sowie für den dritten Teilnehmer TLN3 zusätzlich die Angabe dessen Rufnummer. Zusätzlich gibt der erste Teilnehmer TLN1 seine eigene Email-Adresse, beispielsweise "tln1@net1.com" an.

Im Server CTC werden daraufhin Identifikationen für die einzelnen Teilnehmer vergeben, etwa "T1" für den ersten Teilnehmer TLN1 und so weiter, sowie die weiteren erforderlichen Daten für die Durchführung der Konferenz gespeichert.

In Folge werden der zweite und der dritte Teilnehmer TLN2 und TLN3 vom Server CTC mittels Email über die geplante Konferenz in Kenntnis gesetzt. Diese Email enthält etwa eine Angabe über den Konferenzbeginn, sowie eine Aufforderung an die Teilnehmer, rechtzeitig eine Internetverbindung zu einer angegebenen Adresse aufzubauen und einen Zugangscode. Ein Beispiel für eine solche Nachricht an den zweiten Teilnehmer TLN2 ist: "Konferenz mit TLN1 und TLN3 um 16:00 geplant. Bitte bauen sie bis spätestens 15:50 eine Verbindung zu der Internetadresse ,https://www.server-ctc.com/id=T2' auf! Ihr Zugangscode lautet ,1xd4'."

Es wird angenommen, dass um 15:48 vom ersten Teilnehmer TLN1 und vom zweiten Teilnehmer TLN2 eine Verbindung zum Server CTC aufgebaut wird, wobei eine Authentifizierung durch Angabe des Zugangscodes erfolgt. Dieser Vorgang ist in der Figur mit durchgezogen gezeichneten Linien symbolisiert. Vom Server CTC werden daraufhin die Internetadressen des ersten Teilnehmer TLN1 und des zweiten Teilnehmers TLN2 ermittelt. Dies ist erforderlich weil die Internetadresse eines Teilnehmers TLN diesem nicht zwangsläufig fix zugeordnet ist, sondern gegebenenfalls erst bei Einwahl ins Internet dynamisch zugeteilt wird. Weiters wird angenommen, dass der dritte Teilnehmer TLN3 nicht wie erwartet eine Verbindung zum Server CTC aufbaut.

Um 16:00 werden daher die Internetadressen des ersten und des zweiten Teilnehmers TLN1 und TLN2 sowie die Rufnummer des dritten Teilnehmers TLN3 vom Server CTC an den Vermittlungsknoten VK weitergeleitet, der daraufhin die Verbindungen zu den einzelnen Teilnehmern TLN aufbaut, zum ersten und zweiten Teilnehmer TLN1 und TLN2 über eine paketorientierte Verbindung, welche über das Gateway GAT hergestellt wird, beispielsweise unter Zuhilfenahme des Protokolls H.323/H.225, zum dritten Teilnehmer TLN3 über eine verbindungsorientierte Leitung. Dies ist mit strichliert gezeichneten Linien symbolisiert. In Folge wird, vorausgesetzt dass der erste bis dritte Teilnehmer TLN1..TLN3 den Anruf annimmt, die Konferenz mit Hilfe der Konferenzeinheit KE geschalten.

Voraussetzung für das Funktionieren der Konferenzschaltung ist hier, dass der erste und der zweite Teilnehmer TLN1 und TLN2 über ein für den Sprechverkehr und den Anschluss an das Internet ausgerüstetes Endgerät verfügen. Ein Beispiel hiefür ist ein Multimedia-PC, welcher einen sogenannten Voice over IP Client umfasst. Der dritte Teilnehmer TLN3 benötigt für die Teilnahme an der Konferenz dagegen lediglich ein herkömmliches Telefon.

Die Trennung der erfindungsgemäßen Funktionsweise in einzelne Module (CTC, VK, GAT, KE) dient der übersichtlichen Darstellung und soll nicht als Einschränkung oder Festlegung einer tatsächlichen Realisierung verstanden werden. Vielmehr ist es möglich, das Verfahren auf ein einziges Modul, etwa der Konferenzeinrichtung KS, einen dementsprechend ausgebauten Vermittlungsknoten VK oder einen dementsprechend ausgebauten Server CTC, oder auch auf andere, gegebenenfalls externe, Module abzubilden.

## Patentansprüche

1. Verfahren zum Aufbau einer Telefonkonferenz, bei dem ein erster Teilnehmer (TLN1) eines Telekommunikationsnetzes bei einer Konferenzeinrichtung (KS) eine Telefonkonferenz mit weiteren Teilnehmern (TLN2, TLN3) bucht, **dadurch gekennzeichnet,**
- **dass** der erste Teilnehmer (TLN1) bei der Buchung der Telefonkonferenz Email-Adressen für zumindest einen Teil der Konferenzteilnehmer (TLN2, TLN3) angibt,
- **dass** von der Konferenzeinrichtung (KS) Nachrichten an diese Email-Adressen gesandt werden, welche Angaben über Beginn der Konferenz sowie eine Aufforderung an diese Teilnehmer (TLN2, TLN3) enthalten, rechzeitig vor Beginn der Konferenz eine Verbindung zu einer angegebenen Internetadresse aufzubauen,
- **dass** dann von der Konferenzeinrichtung (KS) die Internetadressen jener Teilnehmer (TLN1, TLN2) ermittelt werden, die rechtzeitig vor Beginn der Telefonkonferenz eine Internetverbindung zu dieser Konferenzeinrichtung (KS) hergestellt haben,
- **dass** von der Konferenzeinrichtung (KS) bei Beginn der Konferenz zu jenen Teilnehmern (TLN1, TLN2), für die eine Internetadresse verfügbar ist, eine paketorientierte Gesprächsverbindung zu dieser Adresse hergestellt wird, und
- **dass** von der Konferenzeinrichtung (KS) bei Beginn der Konferenz zu jenen Teilnehmern (TLN3), für die keine Internetadresse verfügbar ist, eine verbindungsorientierte Gesprächsverbindung hergestellt wird.

2. Verfahren nach Anspruch 1, **dadurch gekennzeichnet,**
- **dass** von einem Server (CTC) der Konferenzeinrichtung (KS) Internetadressen und/oder Telefonnummern der Konferenzteilnehmer an einen Vermittlungsknoten (VK) der Konferenzeinrichtung (KS) weitergeleitet werden,
- **dass** vom Vermittlungsknoten (VK) daraufhin zu den Teilnehmern (TLN1, TLN2), für die eine Internetadresse verfügbar ist, eine paketorientierte Gesprächsverbindung zu dieser Adresse über ein Gateway (GAT) und/oder zu den übrigen Teilnehmern (TLN3) eine verbindungsorientierte Gesprächsverbindung ohne Einbeziehung des Gateway (GAT) hergestellt wird und
- **dass** die Verbindungen mit Hilfe einer Konferenzeinheit (KE) zusammengeschaltet werden.

3. Verfahren nach einem der Ansprüche 1 bis 2, **dadurch gekennzeichnet,**
- **dass** der erste Teilnehmer (TLN1) bei der Buchung der Telefonkonferenz die Rufnummer/Email-Adresse eines Konferenzteilnehmers (TLN) angibt und
- **dass** von der Konferenzeinrichtung (KS) eine diesem Konferenzteilnehmer (TLN) zugeordnete Email-Adresse/Rufnummer aus dieser Rufnummer/ Email-Adresse ermittelt wird.

4. Konferenzeinrichtung (KS) zum Aufbau einer Telefonkonferenz, welcher für die Durchführung aller Schritte des Verfahrens nach einem der Ansprüche 1 bis 3 und zur Annahme einer Buchung einer Telefonkonferenz eines erstes Teilnehmers (TLN1) mit weiteren Teilnehmern (TLN2, TLN3) vorgesehen ist, **dadurch gekennzeichnet,**
- **dass** diese einen Server (CTC), einen mit dem Server (CTC) verbundenen vermittlungsknoten (VK) und ein mit dem Vermittlungsknoten (VK) verbundenes Gateway (GAT) umfasst,
- **dass** diese für die Ermittlung der Internetadressen jener Teilnehmer (TLN1, TLN2) vorgesehen ist, die rechtzeitig vor Beginn der Telefonkonferenz eine Internetverbindung zum Konferenzeinrichtung (KS) hergestellt haben,
- **dass** diese für den Aufbau einer paketorientierten Verbindung zu jenen Teilnehmern (TLN1, TLN2), für die eine Internetadresse verfügbar ist,
- und **dass** diese auch für den alternativen Aufbau einer verbindungsorientierten Verbindung zu Teilnehmern (TLN3), für die keine Internetadresse verfügbar ist, vorgesehen ist.

5. Vermittlungsknoten (VK) für eine Konferenzeinrichtung (KS) nach Anspruch 4, **dadurch gekennzeichnet, dass** dieser für die Übermittlung einer Internetadresse an das Gateway (GAT) vorgesehen ist.

6. Server (CTC) für eine Konferenzeinrichtung (KS) nach Anspruch 4, **dadurch gekennzeichnet, dass** dieser für das Versenden von Nachrichten an Email-Adressen, welche vom ersten Teilnehmer (TLN1) für zumindest einen Teil der Konferenzteilnehmer (TLN) angegeben wurden, vorgesehen ist, wobei die Nachrichten Angaben über Beginn der Konferenz sowie eine Aufforderung an diese Teilnehmer (TLN) enthalten, rechzeitig vor Beginn der Konferenz eine Verbindung zu einer angegebenen Internetadresse aufzubauen.

7. Server (CTC) nach Anspruch 6, **dadurch gekennzeichnet, dass** dieser für die Ermittlung einer einem Konferenzteilnehmer (TLN) zugeordneten Email-Adresse/Rufnummer aus einer vom ersten Teilnehmer (TLN1) angegebenen Rufnummer/Email-Adresse dieses Konferenzteilnehmers (TLN) vorgesehen ist.

## Claims

1. Method for setting up a telephone conference, wherein a first subscriber (TLN1) of a telecommunications network registers with a conference device (KS) to book a telephone conference with further subscribers (TLN2, TLN3),
**characterised in that**
- when booking the telephone conference the first subscriber (TLN1) specifies e-mail addresses for at least some of the conference subscribers (TLN2, TLN3),
- messages are sent to these e-mail addresses by the conference device (KS), which messages contain details about the start of the conference as well as a request to said subscribers (TLN2, TLN3) to set up a connection to a specified internet address in good time before the start of the conference,
- the conference device (KS) then determines the internet addresses of those subscribers (TLN1, TLN2) who have established an internet connection to said conference device (KS) in good time before the start of the telephone conference,
- at the start of the conference a packet-oriented speech connection is established by the conference device (KS) to those subscribers (TLN1, TLN2) for which an internet address is available to said address, and
- at the start of the conference a connection-oriented speech connection is established by the conference device (KS) to those subscribers (TLN3) for which no internet address is available.

2. Method according to claim 1, **characterised in that**
- internet addresses and/or telephone numbers of the conference subscribers are forwarded by a server (CTC) of the conference device (KS) to a switching node (VK) of the conference device (KS),
- a packet-oriented speech connection is then established by the switching node (VK) to the subscribers (TLN1, TLN2) for which an internet address is available to said address via a gateway (GAT) and/or a connection-oriented speech connection is then established to the other subscribers (TLN3) without the inclusion of the gateway (GAT), and
- the connections are joined together with the aid of a conference unit (KE).

3. Method according to one of the claims 1 to 2,
**characterised in that**
- when booking the telephone conference the first subscriber (TLN1) specifies the call number/e-mail address of a conference subscriber (TLN) and
- an e-mail address/call number assigned to said conference subscriber (TLN) is determined from this call number/e-mail address by the conference device (KS).

4. Conference device (KS) for setting up a telephone conference, which device is provided for performing all the steps of the method according to one of the claims 1 to 3 and for accepting a booking of a telephone conference of a first telephone subscriber (TLN1) with further subscribers (TLN2, TLN3),
**characterised in that**
- said device comprises a server (CTC), a switching node (VK) connected to said server (CTC) and a gateway (GAT) connected to the switching node (VK),
- said device is provided for determining the internet addresses of those subscribers (TLN1, TLN2) who have established an internet connection to the conference device (KS) in good time before the start of the telephone conference,
- said device is provided for setting up a packet-oriented connection to those subscribers (TLN1, TLN2) for which an internet address is available, and
- said device is also provided for the alternative setup of a connection-oriented connection to subscribers (TLN3) for which no internet address is available.

5. Switching node (VK) for a conference device (KS) according to claim 4, **characterised in that** said switching node is provided for transmitting an internet address to the gateway (GAT).

6. Server (CTC) for a conference device (KS) according to claim 4, **characterised in that** said server is provided for sending messages to e-mail addresses which have been specified by the first subscriber (TLN1) for at least some of the conference subscribers (TLN), the messages containing details about the start of the conference as well as a request to said subscribers (TLN) to set up a connection to a specified internet address in good time before the start of the conference.

7. Server (CTC) according to claim 6, **characterised in that** said server is provided for determining an e-mail address/call number assigned to a conference subscriber (TLN) from a call number/e-mail address of said conference subscriber (TLN) specified by the first subscriber (TLN1).

## Revendications

1. Procédé d'établissement d'une conférence téléphonique dans lequel un premier participant (TLN1) d'un réseau de télécommunication réserve auprès d'un dispositif (KS) de conférence une conférence téléphonique avec d'autres participants (TLN2, TLN3), **caractérisé**
- **en ce que** le premier participant (TLN1) indique lors de la réservation de la conférence téléphonique des adresses email d'au moins une partie des participants (TLN2, TLN3) à la conférence ;
- **en ce qu'**il est envoyé par le dispositif (KS) de conférence des messages à ces adresses email qui contiennent des indications sur le début de la conférence ainsi qu'une invitation à ces participants (TLN2, TLN3) d'établir à temps avant le début de la conférence une liaison avec l'une des adresses Internet mentionnées ;
- **en ce qu'**ensuite il est déterminé par le dispositif (KS) de conférence les adresses Internet des participants (TLN1, TLN2) qui ont ménagé à temps avant le début de la conférence téléphonique une liaison Internet avec ce dispositif (KS) de conférence ;
- **en ce qu'**il est ménagé par le dispositif (KS) de conférence au début de la conférence avec les participants (TLN1, TLN2) dont l'adresse Internet est disponible une communication en mode paquet à cette adresse ; et
- **en ce qu'**il est ménagé par le dispositif (KS) de conférence au début de la conférence avec les participants (TLN3) pour lesquels on ne dispose pas d'adresses Internet une communication en mode liaison.

2. Procédé suivant la revendication 1, **caractérisé**
- **en ce qu'**il est acheminé par un serveur (CTC) du dispositif (KS) de conférence des adresses Internet et/ou des numéros de téléphone des participants à la conférence à un point nodal de commutation (VK) du dispositif (KS) de conférence ;
- **en ce qu'**il est ménagé par le point nodal de commutation (VK) ensuite avec les participants (TLN1, TLN2) pour lesquels on dispose d'une adresse Internet une communication en mode paquet à cette adresse par une gateway (GAT) et/ou avec les autres participants (TLN3) une communication en mode liaison sans inclusion de la gateway (GAT) ; et
- **en ce que** l'on établit les liaisons à l'aide d'une unité (KE) de conférence.

3. Procédé suivant l'une des revendications 1 à 2, **caractérisé**
- **en ce que** le premier participant (TLN1) indique, lors de la réservation de la conférence téléphonique, le numéro de téléphone/l'adresse email d'un participant (TLN) à la conférence ; et
- **en ce qu'**il est déterminé par le dispositif (KS) de conférence à partir de ce numéro d'appel/adresse email une adresse email/numéro d'appel associé(e) à ce participant (TLN) à la conférence.

4. Dispositif (KS) de conférence pour l'établissement d'une conférence téléphonique qui est prévue pour la mise en oeuvre de tous les stades du procédé suivant l'une des revendications 1 à 3 et pour prendre une réservation d'une conférence téléphonique d'un premier participant (TLN1) avec d'autres participants (TLN2, TLN3), **caractérisé**
- **en ce qu'**il comprend un serveur (CTC), un point nodal de commutation (VK) relié au serveur (CTC) et une gateway (GAT) reliée au point nodal de commutation (VK) ;
- **en ce qu'**il est prévu pour la détermination des adresses Internet de tous les participants (TLN1, TLN2) qui ont ménagé à temps avant le début de la conférence téléphonique une liaison Internet avec le dispositif (KS) de conférence ;
- **en ce qu'**il est prévu pour l'établissement d'une communication en mode paquet avec tous les participants (TLN1, TLN2) pour lesquels on dispose d'une adresse Internet ; et
- **en ce qu'**il est prévu aussi pour l'établissement alternatif d'une communication en mode liaison avec les participants (TLN3) pour lesquels on ne dispose pas d'une adresse Internet.

5. Point nodal de commutation (VK) pour un dispositif (KS) de conférence suivant la revendication 4, **caractérisé en ce qu'**il est prévu pour la transmission d'une adresse Internet à la gateway (GAT).

6. Serveur (CTC) pour un dispositif (KS) de conférence suivant la revendication 4, **caractérisé en ce qu'**il est prévu pour l'envoi de messages à des adresses email qui ont été indiquées par le premier participant (TLN1) à au moins une partie des participants (TLN) à la conférence, les messages contenant des indications sur le début de la conférence ainsi qu'une invitation aux participants (TLN) d'établir à temps avant le début de la conférence une communication avec une adresse Internet mentionnée.

7. Serveur (CTC) suivant la revendication 6, **caractérisé en ce qu'**il est prévu pour la détermination d'une adresse email (numéro d'appel) associée à un participant (TLN) à la conférence à partir d'un numéro d'appel/adresse email, indiqué(e) par le premier participant (TLN1), de ce participant (TLN) à la conférence.
